Europäisches Patentamt

European Patent Office

Office européen des brevets

(11) Veröffentlichungsnummer: **0 300 544 B1**

(12) **EUROPÄISCHE PATENTSCHRIFT**

(45) Veröffentlichungstag der Patentschrift: **13.05.92**

(21) Anmeldenummer: **88201430.1**

(22) Anmeldetag: **07.07.88**

(51) Int. Cl.⁵: **B23B 27/04**

(54) **Stechwerkzeug.**

(30) Priorität: **22.07.87 AT 1854/87**

(43) Veröffentlichungstag der Anmeldung:
**25.01.89 Patentblatt 89/04**

(45) Bekanntmachung des Hinweises auf die
Patenterteilung:
**13.05.92 Patentblatt 92/20**

(84) Benannte Vertragsstaaten:
**BE DE ES FR GB IT NL SE**

(56) Entgegenhaltungen:
**DE-A- 1 552 292**
**DE-U- 8 513 350**
**US-A- 2 846 756**
**US-A- 3 205 558**
**US-A- 3 316 617**

(73) Patentinhaber: **PLANSEE TIZIT GESELL-
SCHAFT M.B.H.**

**A-6600 Reutte/Tirol(AT)**

(72) Erfinder: **Maier, Johann**
**Innerwand 11**
**A-6600 Pflach(AT)**

(74) Vertreter: **Lohnert, Wolfgang, Dr.**
**Metallwerk Plansee GmbH**
**A-6600 Reutte, Tirol(AT)**

## Beschreibung

Die Erfindung betrifft ein Stechwerkzeug, mit einem Werkzeugschaft sowie einem auswechselbar damit verbundenen klingenförmigen Schneideinsatz bzw. einem mit einem Schneideinsatz bestückten, klingenförmigen Schneidenträger, wobei der klingenförmige Schneideinsatz bzw. der Schneidenträger mit seiner Breitseite an einer Wandung des Werkzeugschaftes anliegt und die Schmalseiten des klingenförmigen Schneideinsatzes bzw. Schneidenträgers zumindest in Teilabschnitten mittels zwei sich gegenüberliegenden Führungsflächen des Werkzeugschaftes geführt sind und wobei etwa senkrecht an eine dieser Führungsflächen und etwa senkrecht zur Wandung eine Plananlagefläche angrenzt, an die eine entsprechende Gegenfläche des klingenförmigen Schneideinsatzes bzw. Schneidenträgers mittels Klemmvorrichtungen unter Vorspannung angepreßt ist.

Die DE-OS 34 34 653 beschreibt ein Stechwerkzeug dieser Art, bei dem ein klingenförmiger Schneidenträger in einer durchgehenden seitlichen Ausnehmung des Werkzeugschaftes über eine Schwalbenschwanzführung verschiebbar geführt ist. Durch Zusammenpressen von beidseitig am Schneidenträger anliegenden, federnden Klemmleisten des Werkzeugschaftes wird der Schneidenträger in der gewünschten Position geklemmt.

Nachteilig bei diesem Stechwerkzeug ist, daß die durch die Schnittkraft bedingte Mindestabmessung des klingenförmigen Schneidenträgers in der Höhe, über die ganze Schneidenträgerlänge erhalten bleiben muß, da sich der Schneidenträger ausschließlich an den parallelen Klemmleisten abstützt. Dementsprechend müssen auch die beiden Klemmleisten entsprechend stark dimensioniert sein um eine ausreichend gute Klemmung und Abstützung des Schneidenträgers zu erreichen. Beides führt insgesamt zu einer relativ großen Bauhöhe des Stechwerkzeuges, wodurch das Werkzeug aufgrund von Aufnahmeproblemen, bei verschiedenen Werkzeugmaschinen nicht zum Einsatz kommen kann. Auch die Länge der parallelen Führung des klingenförmigen Schneidenträgers im Werkzeugschaft darf ein gewisses Maß nicht unterschreiten, um die ausreichende Abstützung des Schneidenträgers gegen die Schnittkraft zu gewährleisten, so daß auch eine verhältnismäßig große Länge des Werkzeugschaftes charakteristisch für diese Art von Stechwerkzeug ist.

Die DE-PS 22 50 332 beschreibt ein Stechwerkzeug bei dem der Schneidenträger mit einem seitlich vorstehenden Klemmteil in einer seitlichen Ausnehmung des Werkzeugschaftes in parallelen, in Richtung der Werkzeuglängsachse verlaufenden Führungsflächen geführt ist. Die untere Führungsfläche des Werkzeugschaftes geht in eine senkrecht dazu angeordnete, zur Unterseite des Werkzeugschaftes verlaufende Anlagefläche über. An dieser Anlagefläche stützt sich ein Abschnitt des Schneidenträgers ab, der im Anschluß an den seitlich vorstehenden Klemmteil nach unten verlängert ist. Die Befestigung des Schneidenträgers am Werkzeugschaft erfolgt durch Schrauben, ohne daß der Schneidenträger gezielt an die Anlagefläche gepreßt wird.

Der nach unten verlängerte Abschnitt des Schneidenträgers verbessert zwar die Abstützung des Schneidenträgers und ermöglicht dadurch eine gewisse Verkürzung der parallelen Führung desselben. Da der Schneidenträger jedoch nicht gezielt an die Anlagefläche gepreßt wird, kann es unter Schnittbedingungen noch zu einem gewissen Verkippen des Schneidenträgers kommen, so daß die Stabilität der Verbindung Schneidenträger Werkzeugschaft nicht optimal ist und es zu Schwingungen und Rattern kommen kann. Damit ist die maximal mögliche Auslastung des Schneidenträgers begrenzt. Derartige Stechwerkzeuge werden in der Regel daher nur für Einstecharbeiten verwendet.

Ein ähnliches Stechwerkzeug ist in der US-PS 3 934 320 beschrieben.

Die US-PS 2 964 833 beschreibt ein Stechwerkzeug, bei dem ein klingenförmiger Schneidenträger mit seiner Breitseite an einer Wandung des Werkzeugschaftes anliegt, wobei die Schmalseiten des Schneidenträgers mittels zwei sich gegenüberliegenden Führungsflächen des Werkzeugschaftes geführt sind. Die untere Führungsfläche weist eine senkrecht dazu und zur Wandung des Werkzeugschaftes angeordnete Plananlagefläche auf, an der eine entsprechend ausgebildete Gegenfläche des Schneidenträgers anliegt. Der Schneidenträger wird durch Senkkopfschrauben gezielt gegen diese Plananlagefläche gepreßt. Aber auch bei einem derartigen Stechwerkzeug ist die Verbindung klingenförmiger Schneidenträger und Werkzeugschaft für viele Einsatzfälle noch nicht stabil genug.

Aufgabe der vorliegenden Erfindung ist es, ein Stechwerkzeug mit auswechselbarem Schneideinsatz bzw. Schneidenträger zu schaffen, das im Vergleich zu bekannten Stechwerkzeugen desselben Einsatzbereiches eine geringere Bauhöhe aufweist und bei dem gleichzeitig die Stabilität der Verbindung Schneideinsatz bzw. Schneidenträger und Werkzeugschaft ausgezeichnet ist, so daß es unter Schnittbedingungen nicht zu Rattern oder Schwingungen des Werkzeuges kommen kann und auch die Schneidkantenposition erhalten bleibt, so daß das Stechwerkzeug gleichermaßen gut für Einstech-und Abstecharbeiten eingesetzt werden kann.

Erfindungsgemäß wird dies durch die Merkmale des kennzeichnenden Teils des Anspruchs 1 erreicht.

Dadurch, daß jede dieser Führungsflächen in eine Plananlagefläche übergeht an die der Schneideinsatz bzw. Schneidenträger angepreßt ist, muß der Schneideinsatz bzw. Schneidenträger nur in dem über die äußerste Plananlagefläche überstehenden Bereich, mit der Mindestabmessung in der Höhe ausgeführt sein, die durch den Schnittdruck bedingt ist. Da ein Teil der Schnittkraft von den Plananlageflächen aufgenommen wird, kann der restliche Abschnitt des Schneideinsatzes bzw. Schneidenträgers in der Höhe niedriger ausgeführt werden, so daß sich gleichzeitig eine verringerte Bauhöhe und damit ein erweiterter Anwendungsbereich des Werkzeuges auf verschiedenen Werkzeugmaschinen ergibt.

Durch die erfindungsgemäße Ausgestaltung eines Stechwerkzeuges wird es ermöglicht, ein universelles Werkzeugsystem zu schaffen, bei dem eine optimale Anpassungsmöglichkeit des Stechwerkzeuges an die jeweiligen Arbeitsaufgaben gegeben ist. Das Werkzeugsystem kann unter Verwendung einer begrenzten Zahl von unterschiedlichen Werkzeugschäften und unterschiedlichen Schneidenträgern bzw. Schneideinsätzen praktisch für alle Stechbearbeitungen, wie Abstechen, Einstechen bei der Außen-Innen- sowie Planbearbeitung mit verschiedenen Stechbreiten und Stechtiefen eingesetzt werden. Durch direkte Befestigung des Schneideinsatzes am Werkzeugschaft ohne Verwendung eines Schneidenträgers, werden Inneneinstecharbeiten auch noch bei sehr kleinen Durchmesserbereichen ermöglicht.

In einer erfindungswesentlichen Ausgestaltung des Stechwerkzeuges sind die Führungsflächen zueinander parallel und grenzen die Plananlageflächen jeweils an dem der Schneidkante zugewandten Ende der Führungsflächen an, wobei die beiden Plananlageflächen nicht in einer Ebene liegen.

Dadurch, daß die Plananlageflächen an dem der Schneidkante zugewandten Ende der jeweiligen Führungsfläche verlaufen, ist eine problemlose Fertigung der Ausnehmung des Werkzeugschaftes für den Schneideinsatz bzw. den Schneidenträger und auch des Schneideinsatzes bzw. Schneidenträgers selbst möglich, da die Toleranzen der Führungsflächen und die Toleranzen der Plananlageflächen unabhängig voneinander sind.

Dadurch, daß die Plananlageflächen nicht in einer Eben liegen, also in Längsrichtung der Führungsflächen gegeneinander versetzt sind, wird ausreichend Platz zur Verfügung gestellt, um den Schneideinsatz bzw. Schneidenträger mit dem Werkzeugschaft zu verbinden oder Einrichtungen vorzusehen, die eine Klemmung des Schneideinsatzes im Schneidenträger ermöglichen.

In einer weiteren, erfindungswesentlichen Ausgestaltung des Stechwerkzeuges konvergieren die Führungsflächen gegen das von der Schneidkante abgewandte Ende hin.

Dadurch, daß die Führungsflächen gegen das von der Schneidkante abgewandte Ende hin keilförmig zusammenlaufen, ist es möglich, Schneideinsatz bzw. Schneidenträger und Schaftausnehmung so aufeinander abzustimmen, daß der Schneideinsatz bzw. Schneidenträger bei bloßem Einschieben in den Werkzeugschaft an den Plananlageflächen noch nicht anliegt und erst durch gezieltes Vorspannen des Schneideinsatzes bzw. Schneidenträgers gegen die Plananlageflächen hin an diesen zur Anlage kommt. Durch diese Ausgestaltung wird eine besonders spielfreie Verbindung zwischen Werkzeugschaft und Schneideinsatz bzw. Schneidenträger erreicht.

Ein gewisser Nachteil bei dieser Ausführung ist es, daß die Toleranzen der Führungsflächen und der Plananlageflächen in Abhängigkeit voneinander stehen und daher eine aufwendigere Fertigung des Werkzeuges erforderlich ist.

In einer weiteren erfindungswesentlichen Ausgestaltung eines Stechwerkzeuges sind die Führungsflächen zueinander parallel, wobei eine Führungsfläche an ihrem der Schneidkante zugewandten Ende und die andere Führungsfläche an ihrem der Schneidkante abgewandten Ende jeweils an eine senkrecht zur zugehörigen Führungsfläche angeordnete Plananlagefläche angrenzen.

Auf diese Art und Weise wird ebenfalls eine nochmals verbesserte Abstützung des Schneideinsatzes bzw. Schneidenträgers am Werkzeugschaft erreicht.

Besonders vorteilhaft ist es, wenn das erfindungsgemäße Stechwerkzeug so ausgeführt ist, daß die Verbindung Schneideinsatz bzw. Schneidenträger mit dem Werkzeugschaft über Senkkopfschrauben erfolgt, wobei die Längsachsen der Gewindebohrungen im Werkzeugschaft und die Längsachsen der Senkbohrungen im klingenförmigen Schneideinsatz bzw. Schneidenträger für diese Senkkopfschrauben derart gegeneinander versetzt sind, daß beim Festziehen der Senkkopfschrauben die Gegenflächen vom klingenförmigen Schneideinsatz bzw. Schneidenträger gegen die Plananlageflächen des Werkzeugschaftes gepreßt werden.

Im folgenden wird die Erfindung an Hand von Figuren näher erläutert. Es zeigen:

Fig. 1: Eine bevorzugte Ausgestaltung eines erfindungsgemäßen Stechwerkzeuges mit getrenntem Werkzeugschaft und Schneidenträgerteil in perspektivischer Ansicht.

Fig. 2: Eine weitere bevorzugte Ausgestaltung eines erfindungsgemäßen Stechwerkzeuges in Seitenansicht.

Fig. 3: Eine dritte bevorzugte Ausgestaltung eines erfindungsgemäßen Stechwerkzeuges in Seitenansicht.

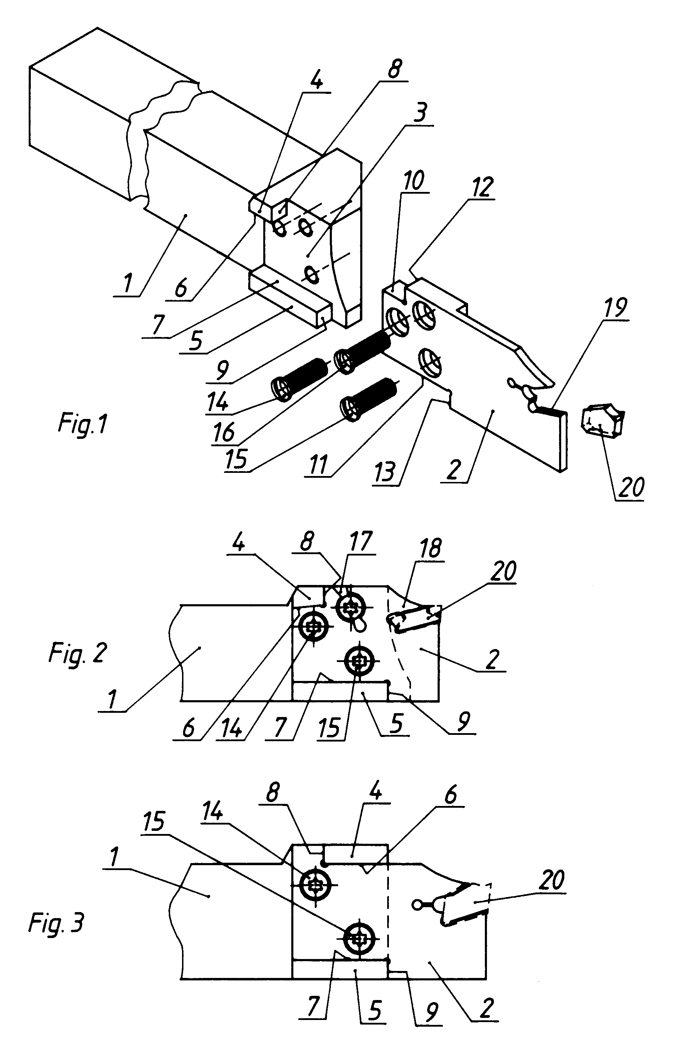

Fig. 1 zeigt ein erfindungsgemäßes Stechwerkzeug, bestehend aus einem Werkzeugschaft -1- mit zwei seitlich angeordneten gegenüberliegenden Stegen -4- und -5- an einem Ende, zur Aufnahme eines klingenförmigen Schneidenträgers -2-. Der klingenförmige Schneidenträger -2-, der mit einer keilförmigen Ausnehmung -19- zur selbstklemmenden Aufnahme eines keilförmigen Schneideinsatzes -20- versehen ist, liegt mit seiner Breitseite an der Seitenwandung -3- des Werkzeugschaftes -1- an und wird mit diesem über Senkkopfschrauben -14-, -15-, -16- verbunden. Die Stege -4- und -5- des Werkzeugschaftes -1- sind mit Führungsflächen -6- und -7- versehen, die jeweils senkrecht zur Wandung -3- und parallel zueinander angeordnet sind. Durch diese Führungsflächen -6- und -7- werden die Abschnitte -10- und -11-der Schmalseiten des Schneidenträgers -2- geführt. Die Stege -4- und -5- sind durch senkrecht zur Wandung -3- und senkrecht zur jeweiligen Führungsfläche -6-, -7- verlaufende Plananlageflächen -8-, -9- begrenzt. Der obere Steg -4- ist gegenüber dem unteren Steg -5- kürzer ausgeführt, so daß die Plananlagefläche -8- und -9- in Längsrichtung des Werkzeugschaftes gegeneinander versetzt sind. Dadurch ist genügend Platz vorhanden, um den Schneidenträger -2- mit drei dreieckförmig angeordneten Senkkopfschrauben -14-, -15-, -16- mit dem Werkzeugschaft -1- zu verbinden. Die Abstände der Längsachsen der Gewindebohrungen im Werkzeugschaft von der Plananlagefläche -9- sind geringfügig größer ausgeführt als die Abstände der Längsachsen der Senkbohrungen im Schneidenträger -2- von der Gegenfläche -13-. Durch diese Maßnahme werden bei einem Festziehen der Senkkopfschrauben -14-, -15-, -16- die Gegenflächen -12- und -13- des Schneidenträgers -2- gegen die Plananlageflächen -8- und -9- des Werkzeugschaftes -1- gepreßt.

In Fig. 2 ist eine weitere Ausführung eines Stechwerkzeuges entsprechend der Erfindung dargestellt.
Bei dieser Ausführung laufen die Führungsflächen -6-, -7- der Stege -4-, -5-gegen das vom Schneideinsatz -20- abgewandte Ende hin keilförmig zusammen. Der Schneidenträger ist mit einem wendbaren Schneideinsatz -20- bestückt, der über eine federnde Nase -18- des Schneidenträgers -2- festgeklemmt wird. Die Senkkopfschrauben -14- und -15- dienen wie beim Stechwerkzeug nach Fig. 1 zum Anpressen des Schneidenträgers -2- an die Plananlagefläche -8- und -9-. Die Schraube -16- dient zur Aufweitung des Schlitzes -17- des Schneidenträgers -2- und damit der Klemmung der Wendeschneidplatte durch die Nase -18- des Schneidenträgers -2-. Auf diese Art und Weise wird eine gute Klemmung des Schneideinsatzes -20- verbunden mit einer gleichbleibenden Schneidkantenposition erreicht. Eine derartige Ausgestaltung des Schneidenträgers -2- wird daher bevorzugt bei Einstecharbeiten verwendet.

Fig. 3 zeigt eine dritte Ausführung eines erfindungsgemäßen Stechwerkzeuges. Bei dieser Ausführung sind die Stege -4- und -5- wieder mit parallelen Führungsflächen -6- und -7- ausgeführt. Der Steg -4- ist wiederum kürzer als der Steg -5- ausgeführt und weist die Plananlagefläche -8- an dem vom Schneideinsatz -20- abgewandten Ende des Steges -4- auf, während der Steg - 5-die Plananlagefläche -9- am dem Schneideinsatz -20- zugewandten Ende aufweist. Die Längsachsen der Gewindebohrungen im Werkzeugschaft und der Senkbohrungen im Schneidenträger -2- sind so zueinander versetzt angeordnet, daß bei einem Festziehen der Senkkopfschraube -14- die Gegenfläche des Schneidenträgers -2- an die Plananlagefläche -8- und bei einem Festziehen der Senkkopfschraube -15- die Gegenfläche des Schneidenträgers -2- an die Plananlagefläche -9- gepreßt wird.

**Patentansprüche**

1. Stechwerkzeug mit einem Werkzeugschaft (1) sowie einem auswechselbar damit verbundenen klingenförmigen Schneideinsatz, bzw. einem mit einem Schneideinsatz (20) bestückten, klingenförmigen Schneidenträger (2), wobei der klingenförmige Schneideinsatz bzw. Schneidenträger (2) mit seiner Breitseite an einer Wandung (3) des Werkzeugschaftes (1) anliegt und die Schmalseiten des klingenförmigen Schneideinsatzes bzw. Schneidenträgers (2) zumindest in Teilabschnitten (10, 11) mittels zwei sich gegenüberliegenden Führungsflächen (6, 7) des Werkzeugschaftes (1) geführt sind und wobei etwa senkrecht an eine dieser Führungsflächen (7) und etwa senkrecht zur Wandung (3) eine Plananlagefläche (9) angrenzt, an die eine entsprechende Gegenfläche (13) des klingenförmigen Schneideinsatzes bzw. Schneidenträgers mittels Klemmvorrichtungen unter Vorspannung angepreßt ist, dadurch gekennzeichnet,
daß auch etwa senkrecht an die zweite Führungsfläche (6) und etwa senkrecht zur Wandung (3) eine zweite Plananlagefläche (8) angrenzt, an die eine entsprechende Gegenfläche (12) des klingenförmigen Schneideinsatzes bzw. Schneidenträgers (2) mittels besagter Klemmvorrichtung unter Vorspannung angepreßt ist, und dabei die Verbindung zwischen Werkzeugschaft (1) und Schneideinsatz bzw. Schneidenträger ausschließlich mittels besagter Klemmvorrichtungen hergestellt wird.

2. Stechwerkzeug nach Anspruch 1, dadurch gekennzeichnet, daß die Führungsflächen (6,7) zueinander parallel sind und daß die Plananlageflächen (8,9) jeweils an dem der Schneidkante zugewandten Ende der Führungsflächen (6,7) angrenzen, wobei die beiden Plananlageflächen (8,9) nicht in einer Ebene liegen.

3. Stechwerkzeug nach Anspruch 1, dadurch gekennzeichnet, daß in Seitenansicht die Führungsflächen (6,7) gegen das von der Schneidkante abgewandte Ende hin konvergieren.

4. Stechwerkzeug nach Anspruch 1, dadurch gekennzeichnet, daß die Führungsflächen (6,7) zueinander parallel sind, wobei eine Führungsfläche (7) an ihrem der Schneidkante zugewandten Ende und die andere Führungsfläche (6) an ihrem der Schneidkante abgewandten Ende jeweils an eine senkrecht zur zugehörigen Führungsfläche (6,7) angeordnete Plananlagefläche (8,9) angrenzen.

5. Stechwerkzeug nach einem der Ansprüche 1 - 4, dadurch gekennzeichnet, daß die Klemmvorrichtungen Senkkopfschrauben (14,15,16) sind, wobei die Längsachsen der Gewindebohrungen im Werkzeugschaft (1) und die Längsachsen der Senkbohrungen im klingenförmigen Schneideinsatz bzw. Schneidenträger (2) für diese Senkkopfschrauben (14,15,16) derartig gegeneinander versetzt sind, daß beim Festziehen der Senkkopfschrauben (14,15,16) die Gegenflächen (12,13) vom klingenförmigen Schneideinsatz (20) bzw. Schneidenträger (2) gegen die Plananlageflächen (8,9) des Werkzeugschaftes (1) gepreßt werden.

## Claims

1. Grooving tool with a tool shank (1) and, exchangeably connected thereto, a blade-shaped cutter insert or a blade-shaped cutter carrier (2) equipped with a cutter insert (20), wherein the blade-shaped cutter insert or cutter carrier (2) abuts with its wide face a wall (3) of the tool shank (1) and the narrow faces of the blade-shaped cutter insert or cutter carrier (2) are guided at least in parts (10, 11) by means of two mutually opposite guide faces (6, 7) of the tool shank (1), and wherein a plane contact face (9) is adjacent and approximately perpendicular to one of these guide faces (7) and approximately perpendicular to the wall (3), a corresponding counterface (13) of the blade-shaped cutter insert or cutter carrier being pressed against the plane contact face (9) under stress by means of clamping devices, characterised in that a second plane contact face (8) is adjacent and approximately perpendicular to the second guide face (6) and approximately perpendicular to the wall (3), and a corresponding counterface (12) of the blade-shaped cutter insert or cutter carrier (2) is pressed against the second plane contact face (8) under stress by means of said clamping device, and in this case the connection between the tool shank (1) and the cutter insert or cutter carrier is formed solely by means of said clamping devices.

2. Grooving tool according to claim 1, characterised in that the guide faces (6, 7) are parallel to one another and in that the plane contact faces (8, 9) respectively abut the end of the guide faces (6, 7) facing the cutting edge, in which case the two plane contact faces (8, 9) are not in one plane.

3. Grooving tool according to claim 1, characterised in that, viewed from the side, the guide faces (6, 7) converge towards the end remote from the cutting edge.

4. Grooving tool according to claim 1, characterised in that the guide faces (6, 7) are parallel to one another and are adjacent in each case to a plane contact face (8, 9) located perpendicular to the associated guide face (6,7), one guide face (7) at its end facing the cutting edge and the other guide face (6) at its end remote from the cutting edge.

5. Grooving tool according to one of claims 1 - 4, characterised in that the clamping devices are countersunk head screws (14, 15, 16), wherein the longitudinal axes of the threaded bores in the tool shank (1) and the longitudinal axes of the countersunk bores in the blade-shaped cutter insert or cutter carrier (2) for these countersunk head screws (14, 15, 16) are offset relative to one another in such a manner that, when the countersunk head screws (14, 15, 16) are tightened, the counterfaces (12, 13) of the blade-shaped cutter insert (20) or cutter carrier (2) are pressed against the plane contact faces (8, 9) of the tool shank (1).

**Revendications**

1. Outil de rainurage comportant une tige (1) d'outil ainsi qu'un insert de coupe en forme de lame, ou un porte-lame (2) en forme de lame garni d'un insert de coupe (20), qui est relié à cette tige de manière à pouvoir être échangé. l'insert de coupe ou le porte-lame (2), en forme de lame, s'appuyant par son côté large sur une paroi (3) de la tige (1) d'outil, et les petits côtés de l'insert de coupe ou du porte-lame (2) en forme de lame étant guidés au moins dans des parties fractionnaires (10, 11) au moyen de deux surfaces de guidage (6, 7) opposées de la tige (1) d'outil, et une surface d'appui plan (9), sur laquelle une contre-surface correspondante (13) de l'insert de coupe ou du porte-lame est comprimée en étant sollicitée à l'aide de dispositifs de serrage, étant adjacente à peu près perpendiculairement à l'une de ces surfaces de guidage (7) et à peu près perpendiculairement à la paroi (3),

   caractérisé en ce qu'une deuxième surface d'appui plan (8), sur laquelle une contre-surface correspondante (12) de l'insert de coupe ou du porte-lame (2) en forme de lame est comprimée en étant sollicitée à l'aide du dispositif de serrage mentionné, est disposée adjacente à la deuxième surface de guidage (6), en lui étant à peu près perpendiculaire, et à peu près perpendiculaire à la deuxième paroi (3), et que la liaison entre la tige (1) d'outil et l'insert de coupe ou le porte-lame est de cette manière exclusivement réalisée au moyen des dispositifs de serrage mentionnés.

2. Outil de rainurage selon la revendication 1, caractérisé en ce que les surfaces de guidage (6, 7) sont parallèles entre elles et en ce que les surfaces d'appui plan (8, 9) sont respectivement adjacentes à l'extrémité des surfaces de guidage (6, 7) tournée vers l'arête de coupe, les deux surfaces d'appui plan (8, 9) n'étant pas situées dans le même plan.

3. Outil de rainurage selon la revendication 1, caractérisé en ce que les surfaces de guidage (6, 7) convergent, en vue de côté, en direction de l'extrémité opposée à l'arête de coupe.

4. Outil de rainurage selon la revendication 1, caractérisé en ce que les surfaces de guidage (6, 7) sont parallèles entre elles, chacune des surfaces de guidage (6, 7) étant respectivement adjacente à une surface d'appui plan (8, 9) disposée perpendiculairement à la surface d'appui associée, l'une des surface de guidage (7) à son extrémité tournée vers l'arête de coupe, et l'autre (6) à son extrémité opposée à l'arête de coupe.

5. Outil de rainurage selon l'une des revendications 1 à 4, caractérisé en ce que les dispositifs de serrage sont des vis à têtes fraisées (14, 15, 16), les axes longitudinaux des alésages filetés dans la tige (1) d'outil et les axes longitudinaux des alésages lisses dans l'insert de coupe ou le porte-lame (2) en forme de lame, destinés à ces vis à têtes fraisées (14, 15, 16), étant décalés les uns par rapport aux autres de telle manière que les contre-surfaces (12, 13) sont comprimées par l'insert de coupe (20) ou le porte-lame (2) contre les surfaces d'appui (8, 9) de la tige (1) d'outil lors du serrage des vis à têtes fraisées (14, 15, 16).

Fig.1

Fig. 2

Fig. 3